# EUROPEAN PATENT APPLICATION

(11) **EP 4 666 842 A1**
(43) Date of publication of application: **24.12.2025**
(21) Application number: 24183106.4
(22) Date of filing: 19.06.2024
(51) Int. Cl.: A01G 3/02, B26B 17/02

(54) **A CUTTING TOOL**

(71) Applicant: Fiskars Finland Oy Ab, 02150 Espoo (FI)
(72) Inventor: Isomaa, Matti, 02150 Espoo (FI)
(74) Representative: Kolster Oy Ab

(57) **Abstract**

The invention relates to a cutting tool (1), comprising a jaw (2) with a first jaw member (3) and a second jaw member (4) pivotably connected to each other at a first pivot point (5). A first handle (6) has a first end (8) attached to the first jaw member (3) and a first gear section (9) extends from the first handle (6) towards a second handle (7). The second handle (7) is rotatably connected to the second jaw member (4). To obtain a cutting tool which is well suited for efficient cutting of both large and small objects, a second gear section (11) is provided between the second handle (7) to engage the first gear section (9). The second handle (7) is provided with an actuator (12) which in a first position locks the second gear section (11) to rotate with the second handle (7) and forces the second gear section (11) to rotate along the first gear section (9) to change a distance between the first (6) and second handle (7) when the second handle (7) is rotated, and which in a second position releases the second gear section (11) from the second handle (7), so that mutual rotation between the the second gear section (11) and the second handle (7) is possible.

## Description

### BACKGROUND OF THE INVENTION

### FIELD OF THE INVENTION

This invention relates to cutting tool, such as to pruner used for cutting plants.

### DESCRIPTION OF PRIOR ART

Previously there is known from US 5697159A, for instance, a cutting tool with a gear and a rotary handle. When the user of this cutting tool presses the handles towards each other, the user simultaneously applies a rotation force to one of the handles which rotates around a longitudinal axis of the handle. This rotational force is transferred with the gear to a force moving the handles towards each other.

An advantage with such a cutting tool is that the cutting force is increased due to the gear. This is beneficial when cutting thick objects, for instance, when a relatively large cutting force is needed.

However, a challenge with this cutting tool is that the gear is not needed when smaller objects requiring only a small cutting force are being cut. Fore such cutting the gear does not provide any additional advantage. Instead, it may be more comfortable for the user to utilize another cutting tool which does not have a gear.

Due to this disadvantage this known cutting tool is not very well suited for cutting small objects.

### SUMMARY OF THE INVENTION

An object of the present invention is to solve the above-mentioned drawback and to provide a cutting tool well suited for efficient cutting of both large and small objects. This is achieved with a cutting tool according to independent claim 1.

When the cutting tool is provided with an actuator which in a first position locks the second gear section to rotate with the second handle, and which in a second position releases the second gear section from rotating with the second handle, it becomes possible to efficiently utilize the same cutting tool for cutting objects of various sizes, because the user can select with the actuator whether or not the gear is in used during cutting.

Preferred embodiments of the invention are disclosed in the dependent claims.

### BRIEF DESCRIPTION OF DRAWINGS

In the following cutting tools will be described in closer detail by way of example and with reference to the attached drawings, in which
Figures 1 and 2 illustrate a first embodiment of a cutting tool from different sides,
Figure 3 illustrates a side view of the cutting tool of Figures 1 and 2 with the second handle removed,
Figure 4 illustrates a back view of the cutting tool of Figures 1 and 2 with the second handle removed,
Figure 5 illustrates the second gear section and the actuator of Figures 1 to 4,
Figure 6 illustrates the cutting tool with the actuator in the first position,
Figure 7 illustrates the cutting tool with the actuator in the second position,
Figures 8 and 9 illustrate a second embodiment of a cutting tool,
Figures 10 to 12 illustrate a third embodiment of a cutting tool,
Figure 13 illustrates a fourth embodiment of a cutting tool.

### DESCRIPTION OF AT LEAST ONE EMBODIMENT

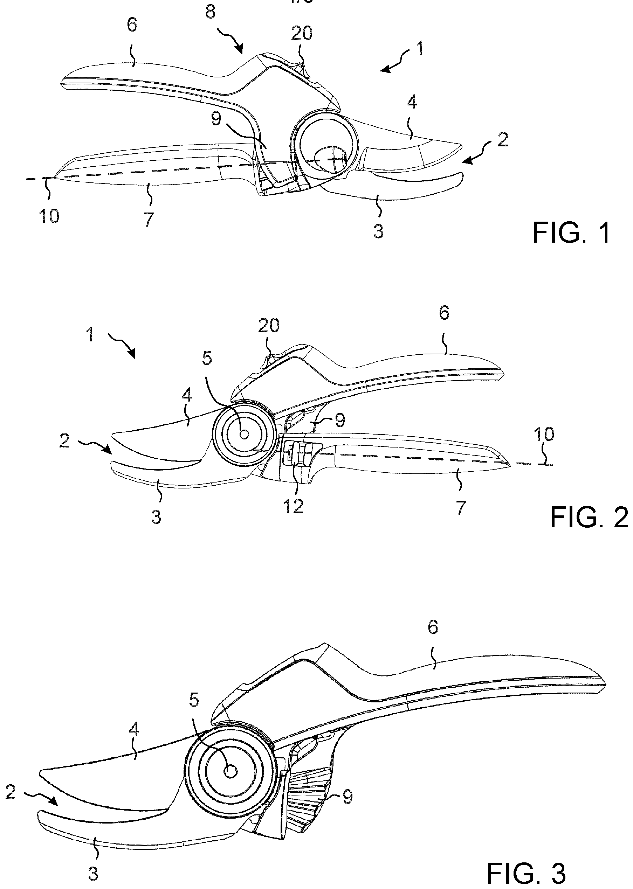

Figures 1 and 2 illustrate a side view of a cutting tool 1 from opposite sides.

In the figures, it is by way of example assumed that the cutting tool is a pruner intended for cutting branches of trees or bushes, for instance. The cutting tool comprises a jaw 2 with a first jaw member 3 and a second jaw member 4 pivotably connected to each other at a first pivot point 5. Consequently, when the first 3 and second 4 jaw members rotate in relation to each other around an axle, for instance, at the pivot point 5, an object located in the jaw 2 can be cut.

A first handle 6 has a first end 8 attached to the first jaw member 3. A second handle 7 is rotatably connected to the second jaw member 4. In the illustrated example, the second handle 7 can rotate in relation to the second jaw member 4 around a rotation axis 10, which extends in a longitudinal direction of the second handle 7.

The second handle 7 is provided with an actuator 12. This actuator is movable between a first position which is a lock position illustrated in Figure 2 and a second position which is a release position where the actuator 12 is located more to the left than in Figure 2. The position of this actuator 12 makes it possible for the user to select whether or not the gear provided to the cutting tool is in use or not, as will be explained later.

Figures 1 and 2 additionally illustrate a lock button 20 provided on top of the first handle 6 to slide along the first handle. This lock button 20 is provided with a hook inside the first handle, which can be used to lock the cutting tool 1 in a position where the first and second jaw members 3 and 4 are as close to each other as possible. In that closed position, when the lock button 20 is pushed forward towards the first and second jaw members, the hook engages a counterpart arranged to a back end of the second jaw member 4, for instance. In this way the cutting tool 1 can be stored and transported in a safe way with the jaw 2 closed while it is not in use.

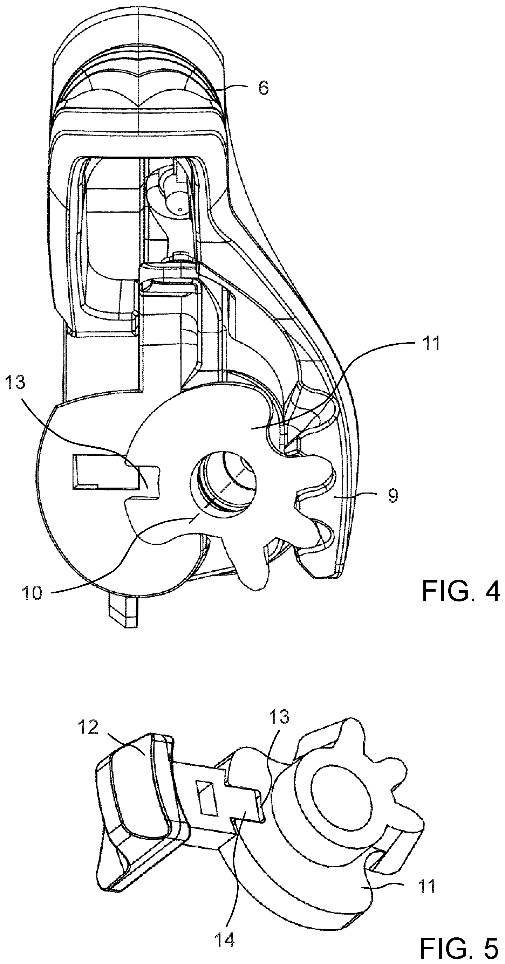

Figure 3 illustrates a side view of the cutting tool 1 with the second handle removed, and Figure 4 illustrates a back view (from the handle side) of the cutting tool with the second handle removed.

The gear of the cutting tool 1 comprises a first gear section 9 extending from the first handle 6 towards the second handle 7. In the illustrated example with the cutting tool in a position with the first handle 6 on top of the second handle 7, the first gear section 9 extends generally downwards along a side of the second handle 7. As can be seen from Figures 3 and 4, a side surface of the first gear section 9 facing the second handle is provided with teeth.

The gear of the cutting tool 1 additionally comprises a second gear section 11 provided between the second handle 7 and the second jaw member 4 for rotation around the rotation axis 10. The first 9 and second 11 gear sections engage each other. Consequently, as the first gear section 9 is provided with teeth in this example, also the second gear section 11 is provided with teeth. However, it is not necessary for the first and second gear sections to have teeth. Instead in some implementations these gear sections may instead have relatively smooth surfaces engaging each other by friction.

Figure 5 illustrates the second gear section 11 and the actuator 12 which is provided to the second handle 7. When the actuator 12 is in the first position illustrated in Figures 2, 5 and 6, a first protrusion 14 of the actuator 12 protrudes into a slot 13 provided in the second gear section 11. In this first position the actuator 12 locks the second gear section 11 to the actuator, which is provided to the second handle 7. Due to this, the second gear member 11 can not rotate around the rotation axis 10 unless also the second handle 7 simultaneously rotates around the rotation axis 10.

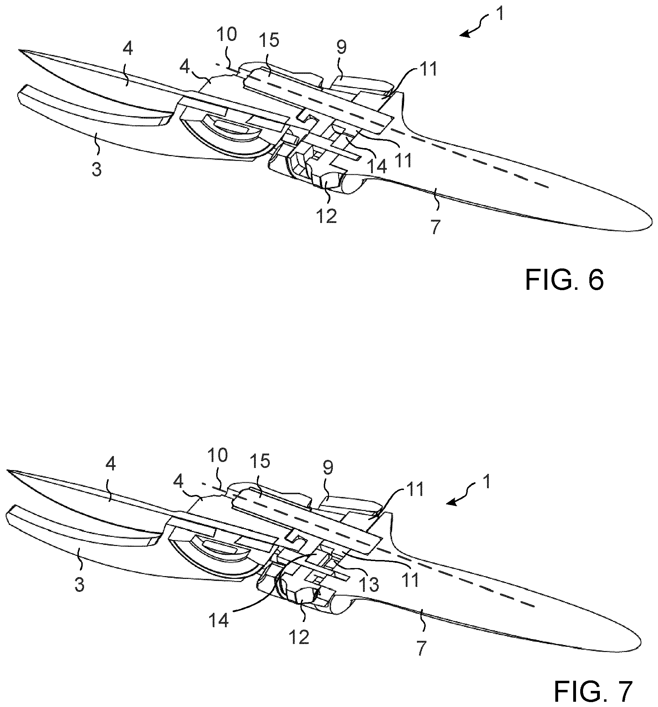

However, when the actuator 12 is in the second position illustrated in Figure 7 the first protrusion 14 of the actuator 12 is no longer protruding into the slot 13 of the second gear section 11, due to which the second gear section 11 is free to rotate in relation to the second handle 7.

Figure 6 illustrates the cutting tool 1 with the actuator 12 in the first position. To show details of the mechanism, the first handle has been removed and some of the remaining parts, such as the second handle 7, the first gear section 9 and the second gear section 11, are shown only partially.

In the first position, the first protrusion 14 of the actuator 12 is located in the slot 13 of the second gear section 11. Due to this the second handle 7 is locked to rotate with the second gear section 11 around the rotation axis 10. In praxis, in the illustrated example, both the second gear section 11 and the second handle 7 will rotate around an axle 15 which rotatably connects the second jaw member 4 to the second handle 7.

When the user presses the first 6 and second 7 handles towards each other during a cutting action, the engagement between the first gear section 9 (attached to the first handle) and the second gear section 11 (locked to rotate with the second handle) will force the second handle to rotate as the handles are pressed towards each other. This rotation will additionally be increased by the users fingers, which during the pressing of the second handle move tangentially along a surface of the second handle 7. This tangential movement of the users fingers will cause the second gear section 11 to rotate even more along the first gear section 9, so that an additional force is created which moves the handles towards each other and therefore increases the cutting force generated at the first 3 and second 4 jaw members.

Consequently, with the actuator 12 in the first position, a lot of cutting force provided by the gear is available, which is beneficial when cutting large objects, however, without providing any advantages while cutting smaller objects.

Figure 7 illustrates the actuator 12 in the second position. To show details of the mechanism, the first handle has been removed and some of the remaining parts, such as the second handle 7, the first gear section 9 and the second gear section 11, are shown only partially.

In the second position the actuator 12 has moved closer to the first 3 and second 4 jaw members, so that the first protrusion 14 is no longer located in the slot 13 of the second gear section 11. As a result, the second gear section 11 is free to rotate in relation to the second handle 7. The first 9 and second 11 gear sections are still engaged to each other, due to which the second gear section 11 freely rotates around the rotation axis 10, without a need for the second handle 7 to also rotate, when the handles are moved in relation to each other during cutting. Due to this, the cutting can be implemented more smoothly with less cutting force, which is preferable while cutting thin objects.

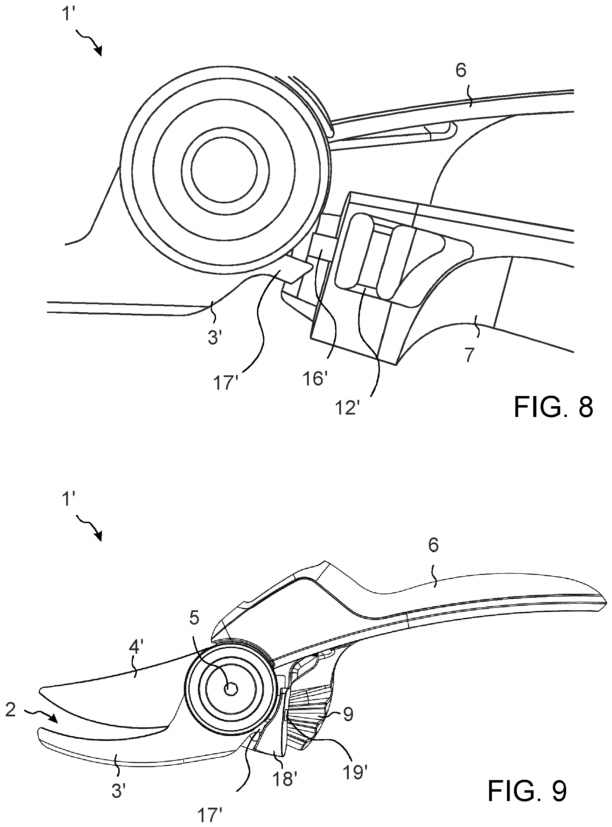

Figures 8 and 9 illustrate a second embodiment of a cutting tool. The cutting tool 1' is very similar to the one explained in connection with Figures 1 to 7. Due to this, in the following the embodiment of Figures 8 and 9 will be mainly explained by pointing out the differences.

For simplicity, and in order to make additional details visible, in Figure 8 only a part of the first handle 6 is shown and the second jaw member 4' and the separator 18' shown in Figure 9 are missing, and in Figure 9 the cutting tool 1' is shown without the second handle 7.

In Figure 8 it is illustrated that the cutting tool 1' is provided with an actuator 12' having a protruding end 16' which protrudes from the second handle 7 towards the first jaw member 3' when the actuator 12' is in the illustrated second position releasing the second gear section 11 to rotate freely in relation to the second handle 7. Additionally, a section of the first jaw member 3' facing the second handle 7' is provided with a protrusion 17' contacting the protruding end 16' of the actuator 12' to limit an opening angle of the first 3' and second jaw members 4' of the cutting tool 1', when the actuator 12' is in the second position and second jaw member 3' is rotated from a closed position to an open position.

An advantage with such a solution is that cutting of small objects becomes even more easy, because the limited opening angle has an impact on the amount of handle movement. With the actuator 12' in the second position, the small objects can be cut with a minimal handle movement.

Figure 9 is very similar to Figure 3. However, in Figure 9 the separator 18' protruding from the back end of the second jaw member 4' into a space between the first jaw member 3' and the second handle 7 is provided with an opening 19'. The opening 19' is provided in the separator 18' in a position making it possible for the protruding end 16' to protrude into this opening 19' when the actuator 12' is moved into the second position illustrated in Figure 8. An advantage with this is that rotation of the second handle 7 in relation to the separator 18' can be prevented when the actuator is in the second position. Due to this, when cutting is done with a smaller force and a smaller handle movement, the second handle 7' is prevented from rotating in relation to the back end of the second jaw member 4', and also in relation to the first handle 6. This keeps the second handle steady as it does not rotate freely around the rotation axis 10 during cutting, which is more comfortable for the user. One alternative is that the protruding end 16' and the opening 19' also have a matching shape preventing mutual rotation, such as a square shape, for instance.

It should be observed, that in some implementations the protrusion 17' illustrated in Figure 8 at the back end of the first jaw member 3' might be missing. In that case the protruding end 16' and the opening 19' in the second protrusion only prevent rotation of the second handle 7' in relation to the back end of the second jaw member 4', but the cutting tool does not have any limitation regarding the opening angle of the jaw 2.

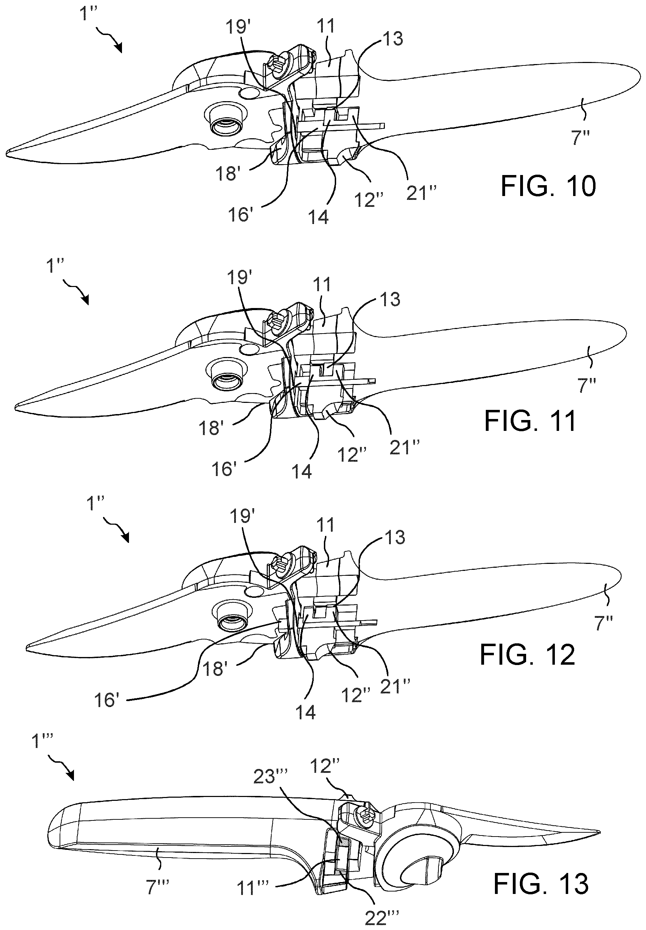

Figures 10 to 12 illustrate a third embodiment of a cutting tool. The third embodiment is very similar to the one explained in connection with Figures 1 to 9. In the following the third embodiment will be mainly explained by pointing out the differences between these embodiments.

In Figures 10 to 12, the actuator 12" in the second handle 7" is provided with an additional second protrusion 21" which protrudes from the actuator 12" in the same direction as the first protrusion 14, but at a distance from the first protrusion 14. The second protrusion makes it possible to use the actuator 12" also for locking the cutting tool 1" in a position where the first and second jaw members and are as close to each other as possible, as will be explained. A separate pushbutton for such locking during storage and transportation can therefore be eliminated.

As in the previous embodiments, the first protrusion 14 of the actuator 12" protrudes into the slot 13 in the second gear section 11" when the actuator 12" is in the first position illustrated in Figure 10. Due to this the second handle 7" is locked to rotate with the second gear section 11" so that a lot of cutting power is provided. At this stage the protruding end 16' of the actuator 12" does still not reach the opening 19' provided in the separator 18'.

In Figure 11 the cutting tool 1" is illustrated with the actuator 12" in the second position where the first protrusion 14 is no longer located in the slot 13 of the second gear section 11. As a result, the second gear section 11 is free to rotate in relation to the second handle 7". Due to this, the cutting can be implemented more smoothly with less cutting force, which is preferable while cutting small objects.

In the second position of the actuator 12", the protruding end 16" of the actuator 12" protrudes into the opening 19', as illustrated in the example of Figure 11. Due to this mutual contact between the opening 19' in the separator 18' and the protruding end 16' prevents the second handle 7" with the actuator 12" from rotating in relation to the separator 18' protruding from the back end of the second jaw member. As a consequence, the second gear section 11" is free to rotate in relation to the second handle 7", and the second handle is prevented from rotating around the rotation axis 10 during cutting.

Finally, in Figure 12 the cutting tool 1" is illustrated with the actuator 12" in a third position, as far to the left as possible in Figure 12. In this position the second protrusion 21" protrudes into the slot 13 in the second gear section 11. Due to this the second handle 7" is locked to rotate with the second gear section 11. However, simultaneously, the protruding end 16' of the actuator 12" protrudes into the opening 19'. This prevents the second handle 7" from rotating in relation to the separator 18" protruding from the back end of the second jaw member. The result of this double locking is that the first and second jaw members remain as close to each other as possible, due to which the jaw remains closed and the cutting tool is ready for safe transportation or storage.

Figure 13 illustrates a fourth embodiment of a cutting tool. The cutting tool 1‴ of Figure 13 is very similar to the one explained in connection with Figures 1 to 12. Due to this, in the following the embodiment of Figure 13 will be mainly explained by pointing out the differences.

In the previous embodiments the opening angle of the cutting tool has been limited due to contact between the protruding end of the actuator and the protrusion provided to a section of the first jaw member. However, in the embodiment of Figure 13 an alternative solution for limiting the opening angle is presented. This alternative solution can be utilized in one of the previously disclosed embodiments.

In Figure 13 the second gear section 11‴ of the cutting tool 1‴ is provided with a shoulder having a contact surface 22‴. When the actuator 12‴ in the second position releasing the second gear section 11‴ to rotate in relation to the second handle 7‴ and the cutting tool is used for cutting small objects with a smaller opening angle, the shoulder with the contact surface 22‴ moves in relation to the second handle 7'". Once the first jaw and second jaw have reached the predefined opening angle, the contact surface 22‴ comes into contact with a counter surface 23‴ provided to the second handle 7'". Consequently, contact between the contact surface 22‴ and the counter surface 23‴ limits the opening angle.

It is to be understood that the above description and the accompanying figures are only intended to illustrate the present invention. It will be obvious to a person skilled in the art that the invention can be varied and modified without departing from the scope of the invention.

## Claims

1. A cutting tool (1,1', 1", 1‴), comprising:
a jaw (2) with a first jaw member (3, 3') and a second jaw member (4, 4') pivotably connected to each other at a first pivot point (5), and
a first (6, 6') and a second (7, 7", 7‴) handle, wherein
the first handle (6, 6') has a first end (8) attached to the first jaw member (3, 3') and a first gear section (9) extending from the first handle (6, 6') towards the second handle (7, 7", 7‴), and
the second handle (7, 7", 7‴) is rotatably connected to the second jaw member (4, 4') for rotation in relation to the second jaw member (4, 4') around a rotation axis (10) extending in a longitudinal direction of the second handle (7, 7", 7‴), **characterized in that**,
a second gear section (11, 11‴) is provided between the second handle (7, 7", 7‴) and the second jaw member (4, 4') to rotate around the rotation axis (10), the second gear section (11, 11‴) engages the first gear section (9), and
the second handle (7, 7", 7‴) is provided with an actuator (12, 12', 12", 12‴) which in a first position locks the second gear section (11, 11‴) to rotate with the second handle (7, 7", 7‴) and forces the second gear section (11, 11‴) to rotate along the first gear section (9) to change a distance between the first (6, 6') and second handle (7, 7", 7‴) when the second handle (7, 7", 7‴) is rotated, and which in a second position releases the second gear section (11, 11‴) from the second handle (7, 7", 7‴), so that mutual rotation between the second gear section (11, 11‴) and the second handle (7, 7", 7‴) is possible.

2. The cutting tool (1,1', 1", 1‴) according to claim 1, wherein
the first gear section (9) and the second gear section (11, 11‴) engage each other via mating gear teeth.

3. The cutting tool according to claim 1, wherein the first gear section (9) and the second gear section (11, 11‴) engage each other by friction.

4. The cutting tool (1, 1', 1") according to one of claims 1 to 3, wherein the actuator (12, 12', 12", 12‴) is provided with a first protrusion (14) which in the first position of the actuator (12, 12', 12", 12‴) protrudes into a slot (13) in the second gear section (11, 11‴) to lock the second gear section (11, 11‴) to rotate with the second handle (7, 7", 7‴), and which in the second position of the actuator (12, 12', 12", 12‴) has moved out of the slot (13) to release the second gear section (11, 11‴) from the second handle (7, 7", 7‴) to allow mutual rotation between the second gear section (11, 11‴) and the second handle (7, 7", 7‴).

5. The cutting tool (1', 1", 1‴) according to one of claims 1 to 4, wherein
the actuator (12', 12", 12‴) is provided with a protruding end (16') which protrudes from the second handle (7) towards the first jaw member (3').

6. The cutting tool (1', 1", 1‴) according to claim 5, wherein
a back end of the second jaw member (4') is provided with a separator (18') protruding into a space between the first jaw member (3') and the second handle (7", 7‴), and
the separator (18') is provided with an opening (19') receiving the protruding end (16') of the actuator when the actuator (12', 12", 12‴) is in the second position for preventing rotation of the second handle (7", 7‴) in relation to the separator (18') when the actuator is in the second position.

7. The cutting tool according to claim 6, wherein
the cutting tool (1") has a third position for the actuator (12") for locking the cutting tool (1") in a position where the first and second jaw members are as close to each other as possible, in which third position a second protrusion (21") of the actuator (12") protrudes into the slot (13) in the second gear section (11) to lock the second gear section (11) to rotate with the second handle (7"), and in which third position the protruding end (16') of the actuator (12") is received in the opening (19') of the separator (18') for preventing rotation of the second handle (7") in relation to the separator (18").

8. The cutting tool (1', 1") according to one of claims 5 to 7, wherein a section of the first jaw member (3') facing the second handle (7', 7") is provided with a protrusion (17') contacting the protruding end (16') of the actuator (12', 12") to limit an opening angle of the jaw of the cutting tool (1', 1") when the actuator (12', 12") is in the second position and the second jaw member is rotated from a closed position to an open position.

9. The cutting tool (1‴) according to one of claims 5 to 7, wherein the second gear section (11‴) is provided with a shoulder having a contact surface (22‴) and the second handle (7‴) is provided with a counter surface (23‴), and contact between the contact surface (22‴) and the counter surface (23‴) limits the opening angle of the jaw of the cutting tool (1‴) when the actuator is in the second position and the second jaw member is rotated from a closed position to an open position.
